# EUROPÄISCHE PATENTSCHRIFT

(11) **EP 4 421 406 B1**
(45) Veröffentlichungstag und Bekanntmachung des Hinweises auf die Patenterteilung: **08.04.2026**
(21) Anmeldenummer: 24157756.8
(22) Anmeldetag: 15.02.2024
(51) Int. Cl.: F24S 20/00, F24S 70/14, F24S 10/50

(54) **SOLARABSORBER-MODUL**
SOLAR ABSORBER MODULE
MODULE ABSORBEUR SOLAIRE

(30) Priorität: 23.02.2023 DE 102023104486
(43) Veröffentlichungstag der Anmeldung: 28.08.2024
(73) Patentinhaber: OKU Obermaier GmbH, Kunststoff und Metall, 82538 Geretsried (DE)
(72) Erfinder: OBERMAIER, Andreas, 82335 Berg (DE); OBERMAIER, Ulrich, 82335 Berg (DE)
(74) Vertreter: Grättinger Möhring von Poschinger Patentanwälte Partnerschaft mbB

(56) Entgegenhaltungen:
- EP-A1- 4 024 701
- WO-A1-2017/127884
- CN-A- 113 357 831
- FR-A- 1 094 368
- US-A- 4 027 821
- US-A- 4 210 127
- US-A1- 2007 283 950

## Beschreibung

Die vorliegende Erfindung betrifft ein Solarabsorber-Modul, umfassend einen Zentralbereich mit zwei zueinander beabstandeten, einen zwischen sich angeordneten Durchströmungsraum begrenzenden Wandflächen und zwei einander gegenüberliegende, den Zentralbereich einfassende Randbereiche mit jeweils einem Sammler in Form eines mit dem Durchströmungsraum kommunizierenden Kanals. Insbesondere betrifft die Erfindung dabei, wie im Oberbegriff des Anspruchs 1 angegeben, ein solches vorstehend genanntes Solarabsorber-Modul, bei dem jeder der beiden Kanäle endseitig in zwei im Wesentlichen parallel zu der Erstreckung des betreffenden Kanals orientierte erste Anschlussstutzen mündet, von jedem Kanal zwei im Wesentlichen rechtwinklig zu der Erstreckung des betreffenden Kanals orientierte zweite Anschlussstutzen abzweigen und der Zentralbereich und die beiden Randbereiche samt der Anschlussstutzen Teil eines einstückig geformten Kunststoff-Bauteils sind.

Solarabsorber-Module im Sinne der vorliegenden Erfindung, wie sie insbesondere für die Erwärmung von sie durchströmender Flüssigkeit (z. B. das Wasser von Pools und Schwimmbecken) bestimmt sind, sind im Interesse einer hohen Absorption des auftreffenden Sonnenlichts und mithin einer effizienten Erwärmung des durchströmenden Wassers bzw. sonstigen Fluids typischerweise aus schwarz eingefärbtem Kunststoff hergestellt. Die beiden Wandflächen sind dabei üblicherweise über den Zentralbereich verteilt (mehr oder weniger punktuell) mittels einer Vielzahl von Verbindungsarealen miteinander verbunden, um sowohl einem Einfallen als auch einem Ausbeulen der den (typischerweise flachen) Durchströmungsraum begrenzenden Wandflächen entgegenzuwirken.

So lässt sich selbst bei vergleichsweise geringen Wandstärken der Wandflächen und somit geringem Materialeinsatz der im Hinblick auf den Wärmeeintrag in das Wasser bzw. sonstige Fluid günstige definierte Abstand zwischen den Wandflächen, d. h. eine günstige Erstreckung des Durchströmungsraumes in dessen Höhe, gewährleisten.

Die einzelnen, typischerweise eine im Wesentlichen rechteckige Grundform aufweisenden Module lassen sich untereinander unter Nutzung der Anschlussstutzen und zusätzlicher Verbinder (z. B. Schlauch- bzw. Rohrstücke und Schellen) zu größeren Absorberflächen fluidisch verketten bzw. vernetzen. Unter Gesichtspunkten der Handhabbarkeit bei der (ggf. durch Heimwerker erfolgende) Montage, der Flexibilität bei der baukastenartigen Bestückung unterschiedlich dimensionierter und proportionierter Aufstellflächen (z. B. Dachflächen, beispielsweise von Garagen) und der wärmetechnischen Effizienz haben sich bei (vorzugsweise im privaten Anwenderbereich anzutreffenden) eher kleinen zusammenhängenden Aufstellflächen beispielsweise Absorbermodule mit Abmessungen von etwa 0,7-1,0m auf 1,0-1,5m bewährt, wohingegen bei (vorzugsweise im kommerziellen Anwenderbereich wie beispielsweise kommunale oder hoteleigene Schwimmbäder anzutreffenden) größeren zusammenhängenden Aufstellflächen bevorzugt größere Absorbermodule (z. B. mit Abmessungen von etwa 1,0-1,2m auf 1,7-2,2m) zum Einsatz kommen können.

Solarabsorber-Module, wie sie namentlich der Erwärmung des Wassers von Pools und Schwimmbädern dienen, sind aus der Patentliteratur (vgl. beispielsweise US 4,213,449 A, EP 2 284 910 B1, EP 2 284 452 A1, EP 1 455 147 A2, EP 2 808 618 A2, EP 3 285 022 A1, JP 58-142653 U, US 3,991,742 A, US 4,206,748 A US 2007/0227533 A1, US 2011/0259006 A1, WO 2011/058401 A1, WO 2019/077640 A1 und WO 2019/090384 A1) bekannt sowie in der Praxis im Einsatz (vgl. beispielsweise das Produktsortiment der Anmelderin sowie der Fa. Roth Werke GmbH, DE-35232 Dautphetal). Dabei weisen namentlich die HelioPool^{®} Solarabsorber-Module der Roth Werke GmbH (vgl. insoweit auch US 2007/0283950 A1) den gattungsgemäßen, im Oberbegriff des Anspruchs 1 angegebenen Aufbau auf.

Auch die WO 2017/127884 A1 offenbart ein Solarabsorber-Modul der gattungsgemäßen Art. Dieses zeichnet sich dabei dadurch aus, dass die beiden den Durchströmungsraum begrenzenden Wandflächen unterschiedlich ausgeführt sind; die obere Wandfläche ist gewellt bzw. gerippt, so dass parallel zueinander orientierte Kanäle gebildet werden, wohingegen die untere Wandfläche turbulenzsteigernde punktuelle Vertiefungen, Krater bzw. Dellen aufweist. Weiterhin sind die die Sammler bildenden Kanäle dort, wo die zweiten Anschlussstutzen von ihnen abzweigen, abgeflacht.

Die vorliegende Erfindung hat sich zur Aufgabe gemacht, die praktische Brauchbarkeit gattungsgemäßer Solarabsorber-Module weitergehend zu verbessern. Insbesondere soll ein in dem Sinne verbessertes gattungsgemäßes Solarabsorber-Modul bereitgestellt werden, dass sich bei verketteter bzw. vernetzter Bestückung einer vorgegebenen Aufstellfläche mit mehreren Solarabsorber-Modulen eine weiter gesteigerte Wärmeausbeute erzielen lässt.

Gelöst wird die vorstehende Aufgabenstellung gemäß der vorliegenden Erfindung durch das in Anspruch 1 angegebene Solarabsorber-Modul. Erfindungsgemäß sind somit bei einem Solarabsorber-Modul der gattungsgemäßen Art die Randbereiche mit den Sammlern benachbart zu den Abzweigungen der zweiten Anschlussstutzen gekröpft, und zwar dergestalt, dass jeweils der Übergang von dem betreffenden Kanal in den jeweiligen zweiten Anschlussstutzen in Richtung auf den Zentralbereich eingezogen ist gegenüber der dem Zentralbereich abgewandten Wandung des betreffenden Kanals zwischen den beiden Kröpfungen. Das Kröpfungsmaß, d. h. der Versatz zwischen der Achse des Kanals jeweils im Bereich der zweiten Anschlussstutzen und der Achse des Kanals zwischen den beiden Kröpfungen, beträgt dabei zwischen dem 0,5-fachen und dem 1,1-fachen des Durchmessers des betreffenden Kanals. Und es besteht jeweils im Bereich der Kröpfung am Übergang von dem Zentralbereich in den betreffenden Kanal mindestens ein die beiden Wandflächen miteinander verbindendes Verbindungsareal.

Mit anderen Worten erstrecken sich, anders als dies für den Stand der Technik zu gattungsgemäßen Solarabsorber-Modulen gilt, bei dem erfindungsgemäßen Solarabsorber-Modul die beiden an den Randbereichen angeordneten Kanäle nicht geradlinig durchgehend zwischen den jeweils zwei zugeordneten ersten Anschlussstutzen. Die beiden Kanäle sind vielmehr zwischen den beiden zweiten Anschlussstutzen jeweils zwei Mal dergestalt gekröpft, dass der Abstand der Mittellinien der beiden Kanäle zueinander zwischen den jeweils zwei Kröpfungen einen größeren Wert hat als jeweils im Bereich der Abzweigungen der zweiten Anschlussstutzen; die beiden Randbereiche des Solarabsorber-Moduls sind dabei, mit anderen Worten, jeweils etwa um 80% +/- 30% des Durchmesser-Maßes des betreffenden Kanals gekröpft. Bei Kanälen mit unrundem, z. B. elliptischem Querschnitt ist hier ein Ersatzdurchmesser anzusetzen, der sich aus der Übertragung der unrunden Querschnittsfläche auf eine kreisförmige ergibt. Durch das jeweils mindestens eine im Bereich der Kröpfung am Übergang von dem Zentralbereich in den betreffenden Kanal vorgesehene, die beiden Wandflächen miteinander verbindende Verbindungsareal erfolgt eine Aussteifung und Stärkung der Struktur an Stellen, welche bei im Sinne der vorliegenden Erfindung gekröpften Randbereichen tendenziell stark beansprucht sind.

Bei dem erfindungsgemäßen Solarabsorber-Modul profitiert die praktische Brauchbarkeit - im Vergleich zum Stand der Technik - in mehrfacher Hinsicht. Bei zueinander vergleichbarer Anordnung übereinstimmend dimensionierter Solarabsorber-Module können nämlich im Falle des erfindungsmäßen Solarabsorber-Moduls die (typischerweise flexiblen) Verbindungsstücke, welche sich bei zwei zueinander benachbarten Solarabsorber-Modulen zwischen den einander gegenüberstehenden zweiten Anschlussstutzen erstrecken, signifikant länger sein als nach dem Stand der Technik gemäß US 2007/0283950 A1, so dass sie Wärmedehnungen der Solarabsorber-Module besser kompensieren können. Und dieser Vorteil lässt sich ohne spannungsmechanisch ungünstige Abflachungen der Randbereiche im Bereich der zweiten Anschlussstutzen, wie sie nach der WO 2017/127884 A1 vorgesehen sind, erreichen. So trägt die Erfindung zu einer Reduktion von mechanischen Belastungen und Spannungen in den Randbereichen der Solarabsorber-Module und somit zu einer Verringerung des Ausfallrisikos und Steigerung der Lebensdauer bei.

Anders herum betrachtet können in Anwendung der vorliegenden Erfindung zwei einander benachbarte, über ihre einander gegenüberstehenden zweiten Anschlussstutzen gekoppelte Solarabsorber-Module so montiert werden, dass ihre einander benachbarten Randbereiche - in den zwischen den Kröpfungen liegenden Abschnitten - einander nahezu berühren, d. h. nur noch den für eine zwängungsfreie thermische Ausdehnbarkeit unbedingt erforderlichen Mindestabstand zueinander einhalten, und zwar bei Beibehaltung der etablierten Verbindungs- bzw. Anschlusstechnik und ohne nachteilige Auswirkungen in anderweitiger Hinsicht. Durch die besagte doppelte Kröpfung der beiden Kanäle zwischen den jeweils zugeordneten zwei zweiten Anschlussstutzen nach außen lässt sich somit die Absorber-Oberfläche, die für den Eintrag solarer Wärme in das das Solarabsorber-Modul durchströmende Fluid maßgeblich ist, in nennenswerter Weise erhöhen. Der prozentuale Gewinn ist dabei namentlich bei eher kurzen Solarabsorber-Modulen durchaus signifikant; und gerade diese eher kurzen Solarabsorber-Module haben den wärmeertragstechnischen Vorteil, dass sich mit ihnen eine über ihre Dimensionen festgelegte vorgegebene Aufstellfläche tendenziell zu einem größeren Anteil mit miteinander verkoppelten Solarabsorber-Modulen bestücken, d. **h.** die gesamte installierte Absorberfläche sich besser der Aufstellfläche annähern lässt. Freilich, die unter Nutzung der vorliegenden Erfindung erzielbaren Vorteile hinsichtlich einer gesteigerten Ausbeute zeigen sich graduell auch bei eher langen Solarabsorber-Modulen. Im Übrigen ist ein weiterer Vorteil von erheblicher Praxisrelevanz, durch den sich erfindungsgemäße Solarabsorber-Module auszeichnen, völlig unabhängig von der jeweiligen Modulgröße, nämlich der verbesserte Schutz der zweiten Auslässe gegen eine mögliche Beschädigung; denn die zweiten Auslässe stehen weniger weit - oder, bei entsprechend starker Kröpfung, überhaupt nicht mehr - gegenüber dem jeweils zwischen ihnen liegenden Abschnitt des betreffenden Randbereichs des Absorber-Moduls vor, was das Risiko einer unbeabsichtigten Schädigung (bei Lagerung, Transport und/oder Montage) erheblich reduziert.

Typischerweise erstrecken sich die zweiten Anschlussstutzen, wie dies auch für gattungsgemäße Solarabsorber-Module nach dem Stand der Technik gilt, in der durch den Zentralbereich definierten Ebene. Zwingend ist dies indessen nicht. Vielmehr kommt auch eine gewisse, mehr oder weniger ausgeprägte Neigung der zweiten Anschlussstutzen relativ zu der durch den Zentralbereich definierten Ebene in Betracht. Dies gilt namentlich bei einer vorgesehenen "geschuppten" Anordnung der Solarabsorber-Module auf der Aufstellfläche.

Gemäß einer ersten bevorzugten Weiterbildung der vorliegenden Erfindung beträgt das Kröpfungsmaß mindestens 50% der Länge des jeweiligen zweiten Anschlussstutzens, so dass letzterer allenfalls um die Hälfte seiner Länge gegenüber der dem Zentralbereich abgewandten äußeren Begrenzung des betreffenden Randabschnitts zwischen den beiden Kröpfungen übersteht. Besonders bevorzugt beträgt das Kröpfungsmaß sogar mindestens 80% der Länge des jeweiligen zweiten Anschlussstutzens, so dass letzterer allenfalls um 20% seiner Länge gegenüber der dem Zentralbereich abgewandten äußeren Begrenzung des betreffenden Randabschnitts zwischen den beiden Kröpfungen übersteht. Auf diese Weise lassen sich die vorstehend dargelegten Vorteile in einem besonders ausgeprägten Maß erreichen.

Gemäß einer anderen bevorzugten Konzeption der Geometrie erfindungsgemäßer Solarabsorber-Module beträgt das Kröpfungsmaß zwischen dem 0,6-fachen und dem 1,0-fachen des Durchmessers des betreffenden Kanals.

Eine andere bevorzugte Weiterbildung der vorliegenden Erfindung zeichnet sich dadurch aus, dass jeweils gegenüber dem zweiten Anschlussstutzen am Übergang von dem Zentralbereich in den betreffenden Kanal mindestens ein die beiden Wandflächen miteinander verbindendes Verbindungsareal besteht. Auf diese Weise erfolgt eine weitere Aussteifung und Stärkung der Struktur an Stellen, welche bei im Sinne der vorliegenden Erfindung gekröpften Randbereichen tendenziell stark beansprucht sind.

Gemäß einer wiederum anderen bevorzugten Weiterbildung der vorliegenden Erfindung sind die Randbereiche benachbart zu den Abzweigungen der zweiten Anschlussstutzen beidseits von diesen doppelt gekröpft dergestalt, dass jeweils in dem Bereich zwischen dem zweiten Anschlussstutzen und dem benachbarten ersten Anschlussstutzen die dem Zentralbereich abgewandte Wandung des betreffenden Kanals gegenüber dem Übergang von dem betreffenden Kanal in den jeweiligen zweiten Anschlussstutzen in Richtung weg von dem Zentralbereich vorspringt. Insbesondere können bei dieser Weiterbildung die ersten Anschlussstutzen mit der Achse des jeweils zugeordneten Kanals - zwischen den gekröpften Bereichen - fluchten. Vorteilhaft ist diese Ausgestaltung unter anderem im Hinblick auf eine gute Zugänglichkeit der ersten Anschlussstutzen für deren Verbindung untereinander.

Eine abermals andere bevorzugte Weiterbildung der vorliegenden Erfindung zeichnet sich dadurch aus, dass - bis zur Installation des jeweiligen Solarabsorber-Moduls, d. h. im Auslieferungszustand, in dem die Solarabsorber-Module auf der Baustelle eintreffen - sämtliche acht Anschlussstutzen fluiddicht verschlossen sind, wobei mindestens sechs der acht Anschlussstutzen mittels einstückig mit den betreffenden Anschlussstutzen ausgeformter Endkappen verschlossen und die verbleibenden Anschlussstutzen mittels nachträglich applizierter Verschlüsse versiegelt sind. Durch die vollständig verschlossene Lagerung und Auslieferung der Solarabsorber-Module ist die Gefahr, dass Fremdkörper in das Innere gelangen (und sich ggf. dort festsetzen und die Strömungsverhältnisse verschlechtern und/oder später, wenn sie sich wieder lösen, sogar eine Umwälzpumpe schädigen) minimal. Je nach der individuellen strömungstechnischen Anbindung des betreffenden Solarabsorber-Moduls werden vor Ort (nur) die - typischerweise zwei - tatsächlich für die Installation benötigten und verwendeten Anschlussstutzen geöffnet. Das werksseitige Verschließen von mindestens sechs der acht Anschlussstutzen mittels einstückig mit den betreffenden Anschlussstutzen ausgeformter Endkappen ist dabei besonders effizient. Das Verschließen von zwei oder ggf. nur einem Anschlussstutzen auf andere Weise, nämlich nachträglich durch Versiegeln mittels applizierter Verschlüsse (z. B. in Form angeschweißter Kappen) trägt dabei dem Umstand Rechnung, dass bei typischen für erfindungsgemäße Solarabsorber-Module eingesetzten Herstellungsverfahren (namentlich dem Blasformen) mindestens ein Anschlussstutzen dazu verwendet wird, um Luft in das Innere des Solarabsorber-Moduls einzublasen. Sind zunächst zwei Anschlussstopfen nicht verschlossen, so erlaubt dies eine definierte Spülung des Solarabsorber-Moduls mit Luft, beispielsweise um die Abkühlung zu beschleunigen und/oder für eine Reinigungs-Spülung, um Produktionsreste zu entfernen.

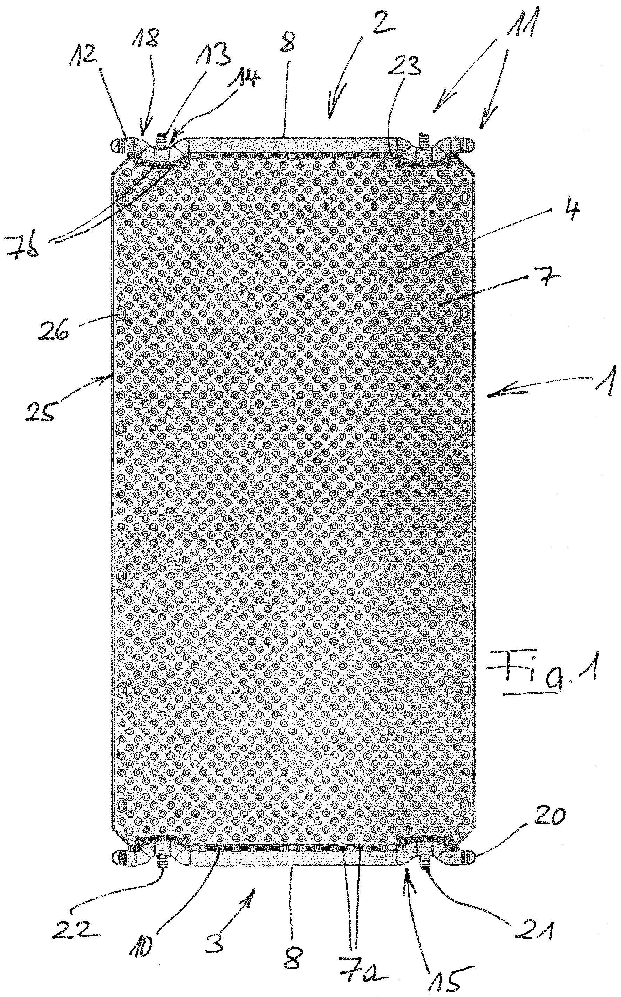

Im Folgenden wird die vorliegende Erfindung anhand eines in der Zeichnung veranschaulichten bevorzugten Ausführungsbeispiels näher erläutert. Dabei zeigt
- Fig. 1: eine Draufsicht auf das Solarabsorber-Modul nach dem Ausführungsbeispiel,

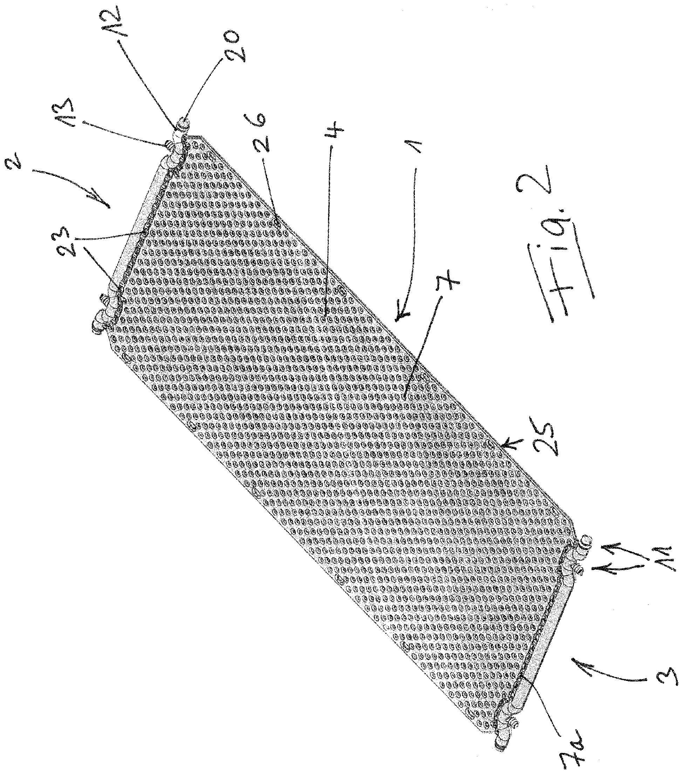

- Fig. 2: eine perspektivische Ansicht des Solarabsorber-Moduls nach Fig. 1 und

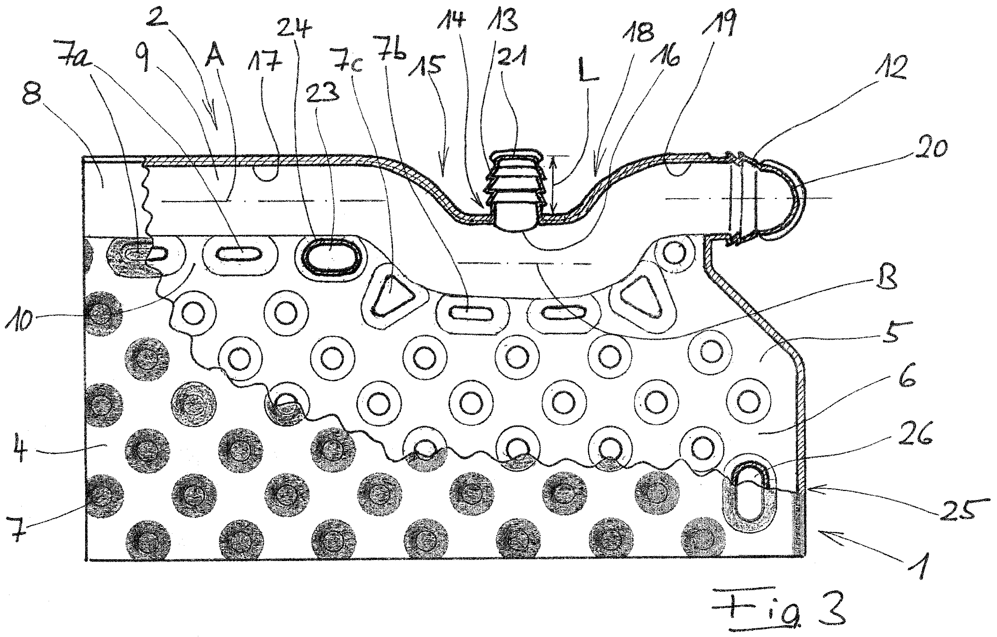

- Fig. 3: in Draufsicht einen Eckbereich des Solarabsorber-Moduls nach den Figuren 1 und 2 in teilweise geschnittener Darstellung.

Das in der Zeichnung dargestellte Solarabsorber-Modul weist - in als solches bekannter Weise - eine im Wesentlichen rechteckige Grundform auf und umfasst einen Zentralbereich 1 und zwei einander gegenüberliegende, den Zentralbereich einfassende Randbereiche 2, 3.

Der Zentralbereich 1 weist dabei zwei zueinander beabstandete Wandflächen 4, 5 auf, welche einen zwischen sich angeordneten Durchströmungsraum 6 begrenzen. Die beiden Wandflächen 4, 5 sind dabei über den Zentralbereich 1 verteilt mittels einer Vielzahl von (im Wesentlichen runden) Verbindungsarealen 7 dergestalt miteinander verbunden, dass sie einen vorgegebenen, die Höhe des Durchströmungsraums 6 definierenden Abstand zueinander einhalten.

Jeder der beiden Randbereiche 2, 3 weist einen Sammler 8 in Form Kanals 9 auf, welcher strömungstechnisch mit dem Durchströmungsraum 6 kommuniziert, und zwar über Durchlässe 10, welche jeweils zwischen zwei einander benachbarten, die beiden Wandflächen 4, 5 angrenzend an den Sammler 8 miteinander verbindenden (im Wesentlichen ovalen) Verbindungsarealen 7a bestehen.

Jeder der beiden Sammler 8 verfügt über vier Anschlüsse 11, indem der jeweilige Kanal 9 endseitig in zwei erste Anschlussstutzen 12 mündet und von jedem Kanal 9 weiterhin zwei im Wesentlichen rechtwinklig zu der Erstreckung des betreffenden Kanals 9 orientierte zweite Anschlussstutzen 13 abzweigen.

Die beiden Randbereiche 2, 3 des Solarabsorber-Moduls sind jeweils benachbart zu den Abzweigungen 14 der zweiten Anschlussstutzen 13 doppelt-gekröpft ausgeführt. Vermittels einer jeweiligen ersten Kröpfung 15 sind die Randbereiche 2, 3 dabei dergestalt gekröpft, dass jeweils der Übergang 16 von dem betreffenden Kanal 9 in den jeweiligen zweiten Anschlussstutzen 13 in Richtung auf den Zentralbereich 1 zurückgezogen ist gegenüber der dem Zentralbereich 1 abgewandten Wandung 17 des betreffenden Kanals 9 zwischen den beiden ersten Kröpfungen 15; die beiden ersten Kröpfungen 15 befinden sich somit zwischen den beiden dem betreffenden Kanal 9 zugeordneten zweiten Anschlussstutzen 13. Weiterhin besteht jeweils eine zweite Kröpfung 18, und zwar jeweils in dem Bereich zwischen dem zweiten Anschlussstutzen 13 und dem benachbarten ersten Anschlussstutzen 12. Die beiden zweiten Kröpfungen 18 befinden sich somit außerhalb der beiden dem betreffenden Kanal 9 zugeordneten zweiten Anschlussstutzen 13; sie bewirken, dass außerhalb der jeweiligen beiden zweiten Anschlussstutzen 13, d. h. jeweils in dem Bereich zwischen einem ersten Anschlussstutzen 12 und dem diesem benachbarten zweiten Anschlussstutzen 13, die dem Zentralbereich 1 abgewandte Wandung 19 des betreffenden Kanals 9 gegenüber dem Übergang 16 von dem betreffenden Kanal 9 in den jeweiligen zweiten Anschlussstutzen 13 in Richtung weg von dem Zentralbereich 1 vorspringt.

Die (endseitig an dem jeweiligen Kanal 9 angeordneten) ersten Anschlüsse 12 erstrecken sich parallel zu der Orientierung des betreffenden Kanals 9 zwischen den beiden zweiten 13 Anschlussstutzen 13. Indem vorliegend die ersten Kröpfungen 15 und die zweiten Kröpfungen 18 das gleiche Kröpfungsmaß (s. u.) aufweisen, fluchten die ersten Anschlussstutzen 12 mit der Achse A des zugeordneten Kanals 9 zwischen den beiden zweiten Anschlussstutzen 13.

Das Kröpfungsmaß, d. h. der Versatz zwischen der Achse A des Kanals 9 zwischen den beiden ersten Kröpfungen 15 und der Achse B des Kanals 9 jeweils im Bereich der zweiten Anschlussstutzen 13, beträgt ca. 60% des Durchmessers des betreffenden Kanals 9. Bezogen auf die Länge L der zweiten Anschlussstutzen 13 beträgt das Kröpfungsmaß jeweils ca. 80%, so dass die beiden zweiten Anschlussstutzen 13 jeweils nur um ca. 20% ihrer Länge L über die dem Zentralbereich 1 abgewandte Wandung 17 des betreffenden Kanals 9 zwischen den beiden ersten Kröpfungen 15 überstehen.

Gegenüber jedem der zweiten Anschlussstutzen 13 bestehen am Übergang von dem Zentralbereich 1 des Solarabsorber-Moduls in den betreffenden Kanal 9, d. h. angrenzend an den Kanal 9, zwei die beiden Wandflächen 4, 5 miteinander verbindende Verbindungsareale 7b von im Wesentlichen ovaler Form. Und im Bereich der ersten Kröpfung 15 und der zweiten Kröpfung 18 besteht jeweils am Übergang von dem Zentralbereich 1 in den betreffenden Kanal 9, d. h. angrenzend an den Kanal 9, ein die beiden Wandflächen 4, 5 miteinander verbindendes Verbindungsareal 7c von im Wesentlichen dreieckiger Form. Zwischen den vorstehend genannten Verbindungsarealen 7b und 7c bestehen wiederum Durchlässe 10, so dass der jeweilige Kanal 9 auch im Bereich der Kröpfungen 15 und 18 strömungstechnisch mit dem Durchströmungsraum 6 kommuniziert.

Das gesamte Solarabsorber-Modul in dem vorstehend beschriebenen Umfang ist dabei einstückig hergestellt, indem der Zentralbereich 1 und die beiden Randbereiche 2, 3 samt der insgesamt acht Anschlussstutzen 12, 13 Teil eines einstückig geformten Kunststoff-Bauteils sind. Dieses einstückig geformte Kunststoff-Bauteil umfasst überdies vier erste Endkappen 20, welche an den vier ersten Anschlussstutzen 12 ausgeführt sind und diese fluiddicht verschließen, sowie zwei zweite Endkappen 21, welche an zwei der vier zweiten Anschlussstutzen 13 ausgeführt sind und diese flüssigkeitsdicht verschließen. Die beiden verbleibenden zweiten Anschlussstutzen 13 sind - im dargestellten Auslieferungszustand des Solarabsorber-Moduls - ebenfalls fluiddicht versiegelt, und zwar mittels nachträglich applizierter, z. B. mit dem betreffenden zweiten Anschlussstutzen 13 verschweißter Verschlüsse 22.

Angrenzend an jeden der beiden Sammler 8 sind, etwa zu den jeweils zugeordneten Verbindungsarealen 7a fluchtend bzw. in deren Reihe angeordnet, drei (im Wesentlichen ovale) Montagedurchbrüche 23 vorgesehen. Die Montagedurchbrüche 23 sind dabei umgrenzt von an den Wandflächen 4, 5 ausgebildeten umlaufenden kragenartigen Wandabschnitten 24 dergestalt, dass die beiden Wandflächen 4, 5 auch im Bereich der Montagedurchbrüche 23 dicht miteinander verbunden sind und der Durchströmungsraum 6 gegenüber den Montagedurchbrüchen 23 abgedichtet ist. Entsprechendes gilt für entlang der beiden freien Längsseiten 25 des Solarabsorber-Moduls angeordnete Montagedurchbrüche 26.

## Patentansprüche

1. Solarabsorber-Modul, umfassend
- einen Zentralbereich (1) mit zwei zueinander beabstandeten, einen zwischen sich angeordneten Durchströmungsraum (6) begrenzenden Wandflächen (4, 5) und
- zwei einander gegenüberliegende, den Zentralbereich (1) einfassende Randbereiche (2, 3) mit jeweils einem Sammler (8) in Form eines mit dem Durchströmungsraum (6) kommunizierenden Kanals (9),
wobei
- jeder der beiden Kanäle (9) endseitig in zwei im Wesentlichen parallel zu der Erstreckung des betreffenden Kanals (9) orientierte erste Anschlussstutzen (12) mündet,
- von jedem Kanal (9) zwei im Wesentlichen rechtwinklig zu der Erstreckung des betreffenden Kanals (9) orientierte zweite Anschlussstutzen (13) abzweigen und
- der Zentralbereich (1) und die beiden Randbereiche (2, 3) samt der Anschlussstutzen (12, 13) Teil eines einstückig geformten Kunststoff-Bauteils sind,
**dadurch gekennzeichnet, dass**
die Randbereiche (2, 3) benachbart zu den Abzweigungen (14) der zweiten Anschlussstutzen (13) dergestalt gekröpft sind, dass jeweils der Übergang (16) von dem betreffenden Kanal (9) in den jeweiligen zweiten Anschlussstutzen (13) in Richtung auf den Zentralbereich (1) zurückgezogen ist gegenüber der dem Zentralbereich (1) abgewandten Wandung (17) des betreffenden Kanals zwischen den beiden Kröpfungen (15), wobei das Kröpfungsmaß, d. h. der Versatz zwischen der Achse des Kanals (9) jeweils im Bereich der zweiten Anschlussstutzen (13) und der Achse des Kanals (9) zwischen den beiden Kröpfungen, zwischen dem 0,5- fachen und dem 1,1-fachen des Durchmessers des betreffenden Kanals (9) beträgt, und wobei ferner jeweils im Bereich der Kröpfung (15) am Übergang von dem Zentralbereich (1) in den betreffenden Kanal (9) mindestens ein die beiden Wandflächen (4, 5) miteinander verbindendes Verbindungsareal (7c) besteht.

2. Solarabsorber-Modul nach Anspruch 1, **dadurch gekennzeichnet, dass** das Kröpfungsmaß mindestens 50% der Länge (L) des jeweiligen zweiten Anschlussstutzens (13) beträgt, so dass letzterer allenfalls um die Hälfte seiner Länge (L) gegenüber der dem Zentralbereich (1) abgewandten äußeren Begrenzung des betreffenden Randabschnitts (2, 3) zwischen den beiden Kröpfungen (15) übersteht.

3. Solarabsorber-Modul nach Anspruch 2, **dadurch gekennzeichnet, dass** das Kröpfungsmaß mindestens 80% der Länge (L) des jeweiligen zweiten Anschlussstutzens (13) beträgt, so dass letzterer allenfalls um 20% seiner Länge (L) gegenüber der dem Zentralbereich (1) abgewandten äußeren Begrenzung des betreffenden Randabschnitts (2, 3) zwischen den beiden Kröpfungen (15) übersteht.

4. Solarabsorber-Modul nach einem der Ansprüche 1 bis 3, **dadurch gekennzeichnet, dass** das Kröpfungsmaß zwischen dem 0,6- fachen und dem 1,0-fachen des Durchmessers des betreffenden Kanals (9) beträgt.

5. Solarabsorber-Modul nach einem der Ansprüche 1 bis 4, **dadurch gekennzeichnet, dass** jeweils gegenüber dem zweiten Anschlussstutzen (13) am Übergang von dem Zentralbereich (1) in den betreffenden Kanal (9) mindestens ein die beiden Wandflächen (4, 5) miteinander verbindendes Verbindungsareal (7b) besteht.

6. Solarabsorber-Modul nach einem der Ansprüche 1 bis 5, **dadurch gekennzeichnet, dass** die Randbereiche (2, 3) benachbart zu den Abzweigungen (14) der zweiten Anschlussstutzen (13) beidseits von diesen doppelt gekröpft sind dergestalt, dass jeweils in dem Bereich zwischen dem zweiten Anschlussstutzen (13) und dem benachbarten ersten Anschlussstutzen (12) die dem Zentralbereich (1) abgewandte Wandung (19) des betreffenden Kanals (9) gegenüber dem Übergang (16) von dem betreffenden Kanal (9) in den jeweiligen zweiten Anschlussstutzen (13) in Richtung weg von dem Zentralbereich (1) vorspringt.

7. Solarabsorber-Modul nach einem der Ansprüche 1 bis 6, **dadurch gekennzeichnet, dass** die ersten Anschlussstutzen (12) mit der Achse (A) des zugeordneten Kanals (9) fluchten.

8. Solarabsorber-Modul nach einem der Ansprüche 1 bis 7, **dadurch gekennzeichnet, dass** sämtliche acht Anschlussstutzen (12, 13) fluiddicht verschlossen sind, wobei mindestens sechs der acht Anschlussstutzen (12, 13) mittels einstückig mit den betreffenden Anschlussstutzen (12, 13) ausgeformter Endkappen (20, 21) verschlossen und die verbleibenden Anschlussstutzen mittels nachträglich applizierter Verschlüsse (22) versiegelt sind.

## Claims

1. Solar absorber module, comprising
- a central area (1) with two wall faces (4, 5) spaced apart from each other and delimiting a flow space (6) arranged between them, and
- two opposite edge areas (2, 3) enclosing the central area (1), each with a collector (8) in the form of a channel (9) communicating with the flow space (6),
wherein
- each of the two channels (9) opens at its ends into two first connection pieces (12) oriented essentially parallel to the extension of the respective channel (9),
- two second connection pieces (13) oriented essentially at right angles to the extension of the respective channel (9) branch off from each channel (9), and
- the central area (1) and the two edge areas (2, 3) together with the connection pieces (12, 13) are part of a one-piece moulded plastic component,
**characterised in that**
the edge areas (2, 3) adjacent to the branches (14) of the second connecting pieces (13) are offset in such a way that the transition (16) from the respective channel (9) into the respective second connecting piece (13) is retracted in the direction of the central area (1) relative to the wall (17) of the respective channel facing away from the central area (1) between the two crankings (15), wherein the offset-dimension, i.e. the offset between the axis of the channel (9) in the area of the respective second connecting piece (13) and the axis of the channel (9) between the two crankings, is between 0.5 and 1.1 times the diameter of the respective channel (9), and wherein, furthermore, at least one connecting area (7c) connecting the two wall faces (4, 5) to each other exists in the area of the cranking (15) at the transition from the central area (1) to the respective channel (9).

2. Solar absorber module according to claim 1, **characterised in that** the offset-dimension is at least 50% of the length (L) of the respective second connection piece (13), so that the latter protrudes at most by half its length (L) beyond the outer boundary, facing away from the central area (1), of the relevant edge area (2, 3) between the two crankings (15).

3. Solar absorber module according to claim 2, **characterised in that** the offset-dimension is at least 80% of the length (L) of the respective second connection piece (13), so that the latter protrudes by at most 20% of its length (L) beyond the outer boundary, facing away from the central area (1), of the relevant edge area (2, 3) between the two crankings (15).

4. Solar absorber module according to one of claims 1 to 3, **characterised in that** the offset-dimension is between 0.6 times and 1.0 times the diameter of the respective channel (9).

5. Solar absorber module according to one of claims 1 to 4, **characterised in that** at least one connecting area (7b) connecting the two wall faces (4, 5) to each other is provided opposite the second connection piece (13) at the transition from the central area (1) to the respective channel (9).

6. Solar absorber module according to one of claims 1 to 5, **characterised in that** the edge areas (2, 3) adjacent to the branches (14) of the second connecting pieces (13) are double-cranked on both sides of these in such a way that, in the area between the second connecting piece (13) and the adjacent first connection piece (12), the wall (19) of the respective channel (9) facing away from the central area (1) projects away from the central area (1) relative to the transition (16) from the respective channel (9) into the respective second connection piece (13).

7. Solar absorber module according to one of claims 1 to 6, **characterised in that** the first connection pieces (12) are aligned with the axis (A) of the associated channel (9).

8. Solar absorber module according to one of claims 1 to 7, **characterised in that** all eight connection pieces (12, 13) are sealed in a fluid-tight manner, wherein at least six of the eight connection pieces (12, 13) are sealed by means of end caps (20, 21) formed integrally with the respective connection pieces (12, 13) and the remaining connection pieces are sealed by means of subsequently applied closures (22).

## Revendications

1. Module absorbeur solaire, comprenant
- une zone centrale (1) avec deux faces de paroi (4, 5) à distance l'une de l'autre, délimitant un espace de traversée (6) disposé entre elles, et
- deux zones de bordure (2, 3) opposées l'une à l'autre, enserrant la zone centrale (1) avec respectivement un collecteur (8) sous la forme d'un conduit (9) communiquant avec l'espace de traversée (6),
sachant que
- chacun des deux conduits (9) débouche en extrémité dans deux premières tubulures de raccordement (12) orientées pour l'essentiel parallèlement à l'extension du conduit (9) concerné,
- de chaque conduit (9) dérivent deux deuxièmes tubulures de raccordement (13) orientées pour l'essentiel à angle droit de l'extension du conduit (9) concerné, et
- la zone centrale (1) et les deux zones de bordure (2, 3) constituent ensemble avec les tubulures de raccordement (12, 13) une partie d'un composant en matière plastique moulé en une seule pièce,
**caractérisé en ce que**
les zones de bordure (2, 3) voisines des embranchements (14) des deuxièmes tubulures de raccordement (13) sont coudées de telle manière que la transition (16) du conduit (9) concerné dans les deuxièmes tubulures de raccordement (13) respectives est respectivement en retrait en direction de la zone centrale (1) en face de la paroi (17) détournée de la zone centrale (1) du conduit concerné entre les deux coudes (15), sachant que la mesure de coude, c'est-à-dire le déport entre l'axe du conduit (9) respectivement dans la zone des deuxièmes tubulures de raccordement (13) et l'axe du conduit (9) entre les deux coudes, représente entre 0,5 fois et 1,1 fois le diamètre du conduit (9) concerné,
et sachant en plus que respectivement dans la zone du coude (15) à la transition de la zone centrale (1) dans le conduit (9) concerné, il y a au moins une aire de liaison (7c) reliant entre elles les deux faces de paroi (4, 5).

2. Module absorbeur solaire selon la revendication 1, **caractérisé en ce que** la mesure de coude représente au moins 50 % de la longueur (L) de la deuxième tubulure de raccordement (13) respective de telle sorte que cette dernière dépasse éventuellement entre les deux coudes (15) de la moitié de sa longueur (L) par rapport à la délimitation extérieure détournée de la zone centrale (1) de la section de bord (2, 3) concernée.

3. Module absorbeur solaire selon la revendication 2, **caractérisé en ce que** la mesure de coude représente au moins 80 % de la longueur (L) de la deuxième tubulure de raccordement (13) respective de telle sorte que cette dernière dépasse éventuellement entre les deux coudes (15) de 20 % de sa longueur (L) par rapport à la délimitation extérieure détournée de la zone centrale (1) de la section de bord (2, 3) concernée.

4. Module absorbeur solaire selon l'une quelconque des revendications 1 à 3, **caractérisé en ce que** la mesure de coude représente entre 0,6 fois et 1,0 fois le diamètre du conduit concerné (9).

5. Module absorbeur solaire selon l'une quelconque des revendications 1 à 4, sachant qu'au moins une aire de liaison (7b) reliant entre elles les deux faces de paroi (4, 5) existe respectivement par rapport à la deuxième tubulure de raccordement (13) à la transition de la zone centrale (1) dans le conduit concerné (9).

6. Module absorbeur solaire selon l'une quelconque des revendications 1 à 5, **caractérisé en ce que** les zones de bordure (2, 3) voisines des embranchements (14) des deuxièmes tubulures de raccordement (13) sont doublement coudées des deux côtés de ceux-ci, **en ce que** dans la zone située entre la deuxième tubulure de raccordement (13) et la première tubulure de raccordement voisine (12), la paroi (19) détournée de la zone centrale (1) du conduit concerné (9) fait respectivement saillie par rapport à la transition (16) du conduit concerné (9) dans la deuxième tubulure de raccordement (13) en direction s'éloignant de la zone centrale (1).

7. Module absorbeur solaire selon l'une quelconque des revendications 1 à 6, **caractérisé en ce que** les premières tubulures de raccordement (12) sont alignées avec l'axe (A) du conduit attribué (9).

8. Module absorbeur solaire selon l'une quelconque des revendications 1 à 7, **caractérisé en ce que** les huit tubulures de raccordement (12, 13) sont toutes fermées étanches au fluide, sachant qu'au moins six des huit tubulures de raccordement (12, 13) sont fermées au moyen de bouchons d'extrémité (20, 21) conformés en une pièce avec les tubulures de raccordement (12, 13) et les tubulures de raccordement restantes sont scellées au moyen de fermetures (22) appliquées ultérieurement.
